# EUROPEAN PATENT APPLICATION

(11) **EP 4 603 386 A1**
(43) Date of publication of application: **20.08.2025**
(21) Application number: 24157365.8
(22) Date of filing: 13.02.2024
(51) Int. Cl.: B64D 11/00, B64D 11/04

(54) **HOLDING SYSTEM FOR CABIN EQUIPMENT**

(71) Applicant: Airbus Operations GmbH, 21129 Hamburg (DE)
(72) Inventor: Petersen, Lauritz, 21129 Hamburg (DE); Benthien, Hermann, 21129 Hamburg (DE); Müller, Florian, 21129 Hamburg (DE)

(57) **Abstract**

The present invention relates to a holding system.

In order to provide for an improved way of connecting cabin equipment to a fuselage structure of an aircraft to provide a more flexible installation of the equipment, the holding system (10) for monuments (12) in an aircraft cabin comprises a longitudinal element (14) having a primary connection arrangement (16) comprising a plurality of first connection interfaces (18) and a monumentary connection arrangement (20) comprising at least one monument connection interface (22). The longitudinal element is mounted to at least two primary fixation points (24) at a primary support structure (26) with the plurality of first connection interfaces, wherein the at least two primary fixation points are distanced from each other in a travel direction (28) of the aircraft. The longitudinal element is connected to at least one monument fixation point (30) at a monument (32) with the at least one monument connection interface, the least at one monument fixation point being arranged on the monument in an upper section (34) of the monument. The monument is configured to be mounted to a floor support structure (36) of the aircraft cabin in a lower section (38) of the monument. The holding system is configured to transfer load (40) from the monument to the primary support structure.

## Description

### FIELD OF THE INVENTION

The present invention relates to a way of connecting cabin interior within a fuselage structure and relates in particular to a holding system for monuments in an aircraft cabin, to an aircraft and to a method for providing the holding system.

### BACKGROUND OF THE INVENTION

The cabin space within a fuselage structure of an aircraft may be furnished with cabin equipment. The integration of the cabin equipment, like galley elements, in the cabin space may require a mounting between the cabin equipment and the fuselage structure of the aircraft. However, this mounting may affect the mechanical properties of the fuselage structure itself, such that the furnishing of the cabin space is restricted to certain kind of cabin equipment only.

### SUMMARY OF THE INVENTION

There may thus be a need for an improved way of connecting a cabin equipment to a fuselage structure of an aircraft to provide a more flexible installation of the equipment.

The object of the present invention is solved by the subject-matter of the independent claims; further embodiments are incorporated in the dependent claims. It should be noted that the following described aspects of the invention apply also for the holding system for the monuments in the aircraft cabin, for the aircraft and for the method for providing the holding system.

According to the present invention, a holding system for monuments in an aircraft cabin is provided. The holding system comprises a longitudinal element having a primary connection arrangement comprising a plurality of first connection interfaces and a monumentary connection arrangement comprising at least one monument connection interface. The longitudinal element is mounted to at least two primary fixation points at a primary support structure with the plurality of first connection interfaces, wherein the at least two primary fixation points are distanced from each other in a travel direction of the aircraft. The longitudinal element is connected to at least one monument fixation point at a monument with the at least one monument connection interface, the least at one monument fixation point being arranged on the monument in an upper section of the monument. The monument is configured to be mounted to a floor support structure of the aircraft cabin in a lower section of the monument. The holding system is configured to transfer load from the monument to the primary support structure.

As an effect, a flexible and light load distribution unit for monuments without structural coupling is provided. As an effect, the longitudinal element does not affect load distribution in the primary support structure, while connecting the monument with the primary support structure.

As an advantage, cabin interior such as monuments are physically connected to a primary structure, though the connection decouples a load path from the monument to the primary support structure. As an advantage a stepless attachment is possible to enable a decoupling of cabin equipment and primary support structure. As an advantage, the longitudinal elements retain the monument with respect to the primary support structure if both differ in their acceleration. As an advantage, the longitudinal element can be used to attach fabric air ducts. As an advantage, a master - slave principle for the cabin adjustment is provided. As an advantage, the holding system can be provided as an integration layer, between the standard layer, such as a primary structure and a customizable layer, such as the cabin interior or equipment. As an advantage, a primary support structure can be built on stock. As an advantage, the compensation of tolerances and the load distribution is key for this system.

According to an example, the plurality of primary connection interfaces is configured to span the longitudinal element along a shortest distance between the at least two primary fixation points, such that the longitudinal element obtains a linear orientation. The longitudinal element is configured to channel forces of the load from the monument in linear directions parallel to the shortest distance.

According to an example, the plurality of primary connection interfaces is configured to hold the longitudinal element at each one of the at least two primary fixation points such that a single load acting on the longitudinal element is equally distributed among each of the at least two primary fixation points.

According to an example, the plurality of first connection interfaces and/or the at least one monument connection interface are provided as crimping connections to the longitudinal element.

According to an example, the longitudinal element is provided as a rope-like structure configured to transfer tensional forces.

According to the present invention, also an aircraft is provided. The aircraft comprises a fuselage structure enclosing a cabin space equipped with at least one cabin monument. A holding system according to one of the preceding claims is provided. The at least one cabin monument is connected to the fuselage structure with the holding system.

As an advantage, the reusability of the primary structure of the aircraft is greatly enhanced. As an advantage, the customizability of an aircraft interior is greatly improved. As an advantage, the customizability of the cabin interior is improved. As a further advantage, a more flexible cabin interior design is enabled.

According to the present invention, also a method for providing a holding system for monuments in an aircraft cabin. The method comprises the following steps:
- Providing a longitudinal element having: a primary connection arrangement comprising a plurality of first connection interfaces and a monumentary connection arrangement comprising at least one monument connection interface.
- Mounting the longitudinal element to at least two primary fixation points at a primary support structure with the plurality of first connection interfaces. The at least two primary fixation points are distanced from each other in a travel direction of the aircraft.
- Connecting the longitudinal element to at least one monument fixation point at a monument with the at least one monument connection interface, the least at one monument fixation point being arranged on the monument in an upper section of the monument. The monument is configured to be mounted to a floor support structure of the aircraft cabin in a lower section of the monument, and wherein the holding system is configured to transfer load from the monument to the primary support structure.

As an advantage, the recyclability and reusability of a primary structure is greatly enhanced.

According to an aspect, an elongate member is connected to a fuselage structure of an aircraft along the preferential flight direction of the aircraft. The elongate member can for example be provided as a fiber-reinforced rope. Cabin structures, like galley elements or modules inside the fuselage structure of the aircraft, can be connected to the rope. The rope retains these galley elements, when their acceleration differs from the acceleration of the aircraft. The rope can be mounted to the fuselage structure without affecting any load distribution in the fuselage structure. Therefore, the rope can be mounted and unmounted to the fuselage structure, whenever it is desired, for example, when the cabin interior is getting refurbished. Also, the rope may enable a customized design of the cabin interior.

According to an aspect, a retainer for monuments in an aircraft cabin is provided.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a holding system.
Fig. 2 also schematically shows an example of a holding system.
Fig. 3 schematically shows an example of a holding support.
Fig. 4 schematically shows an aircraft comprising a holding system.
Fig. 5 shows basic steps of an example of a method for providing a holding system for monuments in an aircraft cabin.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

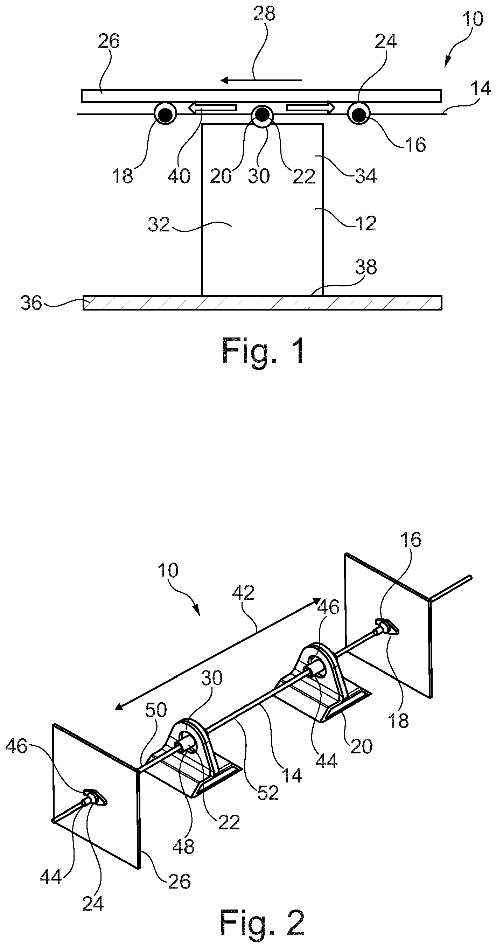

Fig. 1 schematically shows an example of a holding system. The holding system 10 for monuments 12 in an aircraft cabin, comprises a longitudinal element 14 having a primary connection arrangement 16 comprising a plurality of first connection interfaces 18 and a monumentary connection arrangement 20 comprising at least one monument connection interface 22. The longitudinal element 14 is mounted to at least two primary fixation points 24 at a primary support structure 26 with the plurality of first connection interfaces 18, wherein the at least two primary fixation points 24 are distanced from each other in a travel direction 28 of the aircraft. The longitudinal element 14 is connected to at least one monument fixation point 30 at a monument 32 with the at least one monument connection interface 22, the least at one monument fixation point 30 being arranged on the monument 32 in an upper section 34 of the monument 32. The monument 32 is configured to be mounted to a floor support structure 36 of the aircraft cabin in a lower section 38 of the monument 32. The holding system 10 is configured to transfer load 40 from the monument 32 to the primary support structure 26.

The term "holding system" relates to a retainer system to keep a monument in a primary support structure 26 at its position and in its orientation, when the acceleration of the primary support structure 26 differs from the acceleration of the monument 32.

The term "monuments" relates to cabin interior or cabin equipment, such as a galley element, a lavatory, a trolley storage space, a shelf, a wall, a toilet module or cabin wall paneling.

The term "aircraft cabin" relates to an interior of an aircraft that is used to accommodate and serve passengers or to store cargo, not shown in Fig. 1.

The term "longitudinal element 14" relates to a force channelling device that is modified to conduct force only in a single linear direction, represented by the travel direction 28 in Fig. 1.

The term "longitudinal element 14" relates to a linear, elongate, straight, continuous, horizontal element.

The "longitudinal element 14" can also be referred to as rod, column, strut, stick, bar, retainer line, strand, cable, string, rope, rail.

The longitudinal element 14 can also be referred to as retainer rail.

The term "primary connection arrangement" relates to a kit that enables a fastening and a physical connection of the longitudinal element 14 to the primary support structure 26, as shown in Fig. 1.

The term "first connection interfaces" relates to an object that is arranged between the longitudinal element 14 and the at least two primary fixation points 24 and allows an exchange of pressure and binding forces between the at least two primary fixation points 24 and the longitudinal element 14, as shown in Fig. 1.

The term "structurally coupled" relates to a connection between the primary support structure 26 and the secondary structure, i.e., the monument 32 that affects and influence the load 40 distribution of forces acting on and in the primary support structure 26.

The term "monumentary connection arrangement" relates to a kit that enables a fastening and a physical connection of the longitudinal element 14 to the monument 32, as shown in Fig. 1.

The term "monument connection interface" relates to an object that is arranged between the longitudinal element 14 and the at least one monument fixation point 30 and allows an exchange of pressure and binding forces between the at least one monument fixation point 30 and the longitudinal element 14.

The term "monument fixation point" relates to a recess, hole or through hole or any other structure at the monument 32 that is engageable by the monument connection interface 22, as shown in Fig. 1.

In an example, the at least one monument fixation point 30 can be provided at a projection of an upper face of the cabin, being provided as an eyelet or hook, not shown in Fig. 1.

The term "primary fixation points" relates to a recess, hole or through hole or any other structure at the primary support structure 26 that is engageable by the plurality of first connection interfaces 18 to connect to the plurality of first connection interfaces 18.

The term "primary support structure" relates to a primary structure. A primary structure is an element in an aircraft that enables necessary functions to operate the aircraft. Primary structures are therefore the most important parts of an aircraft and underly strict regulations. Changing a primary structure of an aircraft hence not only poses engineering challenges it also poses challenges regarding the certification and approval of the modification at the primary structure. A secondary structure element in an aircraft, such as certain cabin equipment, does not serve any purpose important for the operation of the aircraft. As a consequence, they can be modified without certification and approval.

The term "travel direction" relates to the direction along the aisle of the aircraft cabin from tail to cockpit of the aircraft, not shown in Fig. 1.

The travel direction can be referred to as longitudinal direction of the aircraft.

The travel direction can also be referred to as x-direction or major flight direction.

The term "travel direction" describes the direction from cockpit to tail of the plane or vice versa, as well as the term "longitudinal direction" does.

The travel direction can also be referred to as x-direction, whereas the z-direction refers to the aircraft cabin height and the y-direction to the width of the aircraft cabin, not shown in Fig. 1.

The term "lower section" of the monument 32 refers to the lower half of the monument 32 connected to the ground, floor or support. The lower section 38 of the monument 32 points to the ground, as shown in Fig. 1.

The term "upper section" refers to the upper half of the monument 32 not connected to the ground, floor or support. The upper section 34 points to the cabin ceiling.

In an example, the holding system 10 does not only compensate for structural tolerances between the monument 32 and the primary support structure 26 but also for tolerances in the different acceleration of the primary support structure 26 and the monument 32, not shown in Fig. 1.

In an example, the holding system 10 is configured to transfer load 40 from the monument 32 to the primary support structure 26 in an axis aligned with the travel direction 28, as shown in Fig. 1.

In an example, the monument 32 is provided.

In an example, the lower section 38 comprises a bottom-oriented region of the monument 32 up to a height, that if fixated at the height to a support prevents the monument 32 from tipping-over.

In an example, the primary support structure 26 is provided.

The connection interface can also be referred to as binding interface.

In an example, the monument 32 connection interface 22 connects to the monument 32 by the at least one monument fixation point 30. The first connection interface connects to the primary support structure 26 by at least two primary fixation points 24. The longitudinal element 14 is configured to provide the at least one monument fixation point 30 located at any arbitrary point at the longitudinal element 14 not being the at least one monument fixation point 30, as shown in Fig. 1.

In an example, at least two primary fixation points 24 are provided and the at least one monument fixation point 30 is located at any arbitrary point between the at least two primary fixation points 24.

In an example, a load 40 resulting from a difference in acceleration, not shown in Fig. 1, of a secondary structure, such as cabin equipment like a monument, and acceleration of a primary structure is introduced smoothly into the structure, while avoiding a coupling between the primary support structure 26 and the secondary structure, i.e. the monument 32 or cabin equipment.

In an example, the difference in acceleration is as large as it would cause a change of the orientation and position of the monument with respect to the primary support structure, not shown in Fig. 1.

Fig. 2 also schematically shows an example of a holding system 10. The plurality of primary connection interfaces is configured to span the longitudinal element 14 along a shortest distance 42 between the at least two primary fixation points 24, such that the longitudinal element 14 obtains a linear orientation. The longitudinal element 14 is configured to channel forces of the load 40 from the monument 32 in linear directions parallel to the shortest distance 42.

Span can also be referred to as stretch or bridge.

The term "linear orientation" relates to an alignment that the longitudinal element 14 has after being mounted between the at least two primary fixation points 24, such that a curvature of the longitudinal element 14 by gravitational forces or acceleration forces is prevented, not shown in Fig. 2. A curvature in the longitudinal element 14 could lead to a sideway escape of forces being conducted in the material of the longitudinal element 14, not shown in Fig. 2.

The term "channel forces" relates to a focusing of forces in the linear orientation of the longitudinal element 14. The forces resulting from the load 40 of the monument 32 are forced in a straight linear path between the at least two primary fixation points 24, as shown in Fig. 2.

In an example, the loads are inertia-based loads of the monument 32, not shown in Fig. 2.

As an advantage, a load 40 distribution along the longitudinal axis of the longitudinal element results. As a further advantage, a load 40distribution along the travel direction of the primary support structure of the aircraft results. As an advantage, the ratio between forward and rearward acceleration from a monument in relation to the primary support structure can be considered in the length of the rope between the at least two primary fixation points. As an advantage, fuselage tolerances are compensated by the wire length. As an advantage, parasitic loads are prevented by the linear orientation of the longitudinal element.

In an example not shown in Fig. 2, the plurality of primary connection interfaces is configured to hold the longitudinal element 14 at each one of the at least two primary fixation points 24 such that a single load acting on the longitudinal element 14 is equally distributed among each of the at least two primary fixation points 24.

The term "hold" relates to a binding of the plurality of primary connection interfaces to the longitudinal element 14, such that the longitudinal element 14 is stretched by the plurality of primary connection interfaces but does not introduce tensional forces into the primary support structure 26.

The term "single load" relates to a single force event at a point on the longitudinal element 14 in-between the at least two primary fixation points 24. The single force event travelling along both linear directions of the longitudinal element 14.

The term "equally distributed" relates to an equal division of the force of the single load into equal forces acting with the same strength and in the same manner on the at least two primary fixation points 24, as shown in Fig. 2.

As an advantage, a smooth load introduction in a light hatrack structure is provided.

In an example not shown in Fig. 2, the at least one monument connection interface 22 is configured to transfer load 40 from the monument 32 to the longitudinal element 14 only in the longitudinal direction. The longitudinal element 14 is configured to transfer load 40 to the plurality of first connection interfaces 18 only in the longitudinal direction. The plurality of first connection interfaces 18 is configured to transfer load 40 from the longitudinal element 14 to the primary support structure 26 only in the longitudinal direction.

In an example, the plurality of first connection interfaces 18 and/or the at least one monument connection interface 22 is configured to define a load path during the transfer of load 40 in the longitudinal direction, as shown in Fig. 2.

In an example, a torsion load is imposed on the longitudinal element 14, not shown in Fig. 2.

In an example, the longitudinal element 14 is configured to be deformable when being mounted to the primary support structure 26 and/or when being subject to loads of the primary support structure 26 in a mounted state.

As an advantage, a smooth and continuous load introduction in the primary structure is provided.

In an example of Fig. 2, the plurality of first connection interfaces 18 and/or the at least one monument connection interface 22 provide a form-fit and frictionally engaged connection 44 to the longitudinal element 14.

The term "form-fit and frictionally engaged connection" relates to an interaction between the plurality of first connection interfaces 18 and/or the at least one monument connection interface 22, where the plurality of first connection interfaces 18 and/or the at least one monument connection interface 22 deforms the material of the longitudinal element 14 or where the plurality of first connection interfaces 18 and/or the at least one monument connection interface 22 is deformed at the longitudinal element 14, not shown in Fig. 2. Further, an enhancement of a binding surface area between the plurality of first connection interfaces 18 and/or the at least one monument connection interface 22 and the longitudinal element 14 is provided by the form-fit and frictionally engaged connection 44, not shown in Fig. 2.

In an example, a form-fit and frictionally engaged binding is provided by the at least two primary fixation points 24 and/or the at least one monument fixation point 30.

As an advantage, a load path design is enabled by the first connection interfaces 18 and/or the at least one monument connection interface 22.

In an example of Fig. 2, the plurality of first connection interfaces 18 and/or the at least one monument connection interface 22 are provided as crimping connections 46 to the longitudinal element 14.

The term "crimping connections" relates to bushings that provide a through hole where the longitudinal element 14 can be inserted and fed through. After feeding the longitudinal element 14, the bushings can be deformed, such that a compression force leads to a binding force between the longitudinal element 14 and the bushings. For compression of these bushings a jointing clamp can be used, not shown in Fig. 2.

In an example, the crimping connections 46 are configured to define a load path by their pressure force, size, shape, material, bonding interaction, distance of the at least two primary fixation points 24 and the at least one monument fixation point 30 etc., not shown in Fig. 2.

In an example, the at least two crimping connections 46 are provided at the primary support structure 26 and the longitudinal element 14 is stretched in-between. One of the at least two crimping connections 46 has a higher compression with respect to the longitudinal element 14 than the other crimping connection 46. Consequently, a force acting on the longitudinal element 14 is more focused towards the crimping connection 46 with the higher compression force as its binding to the longitudinal element 14 is stronger, not shown in Fig. 2.

In an example, the crimping connections 46 are provided as bushings that can be inserted form-fitting into at least two primary fixation points 24 at the primary support structure 26.

In an example, the bushings can be fixed at the at least two primary fixation points 24 with the aid of fastening elements or rivets, not shown in Fig. 2.

In an example, the bushings can be crimped on either end, not shown in Fig. 2.

In an example, the bushings are fixed at the at least two primary fixation points 24 by the crimping, not shown in Fig. 2.

In an example, the crimping connections 46 are configured such that a material of the crimping connections 46 penetrates and infuses into the pores and recesses of a fibre structure of the longitudinal element 14, not shown in Fig. 2.

In an example, a material locking connection is provided between the crimping connections 46 and the longitudinal element 14, not shown in Fig. 2.

In an example, as an alternative to crimping connections 46, a curable adhesive matrix or a melting of the longitudinal element 14 is used to connect the longitudinal element 14 to the primary support structure 26 and/or the longitudinal element 14 to the monument 32, not shown in Fig. 2.

In an example, the plurality of first connection interfaces 18 provides a bushing underlying funnel blossom principle between the at least two primary fixation points 24 and the longitudinal element 14, not shown in Fig. 2.

In an example, the crimping connections 46 are provided by pressure-deformable bushings surrounding the longitudinal element 14 in a form-fit manner, as shown in Fig. 2.

In an example, the bushings are configured to be mounted to frames of a fuselage structure in a form-fit manner.

As an advantage, a local crimping connection 46 to the longitudinal element 14 allows a stepless movement of the cabin interface and local tolerance compensations.

As an advantage, a decoupling of the cabin interior, e.g. the cabin monuments with respect to loads paths to the primary support structure is achieved. As an advantage, the primary support structure and the crimping connections 46 can be pre-assembled independently from the monument. As an advantage, monument position tolerances are compensated due to crimping of the module attachment. As an advantage, a fast installation is provided through compressing of the crimping connections 46.

In an example of Fig. 2, the monumentary connection arrangement 20 provides at least one buffered bearing 48. The at least one buffered bearing 48 is arranged between the at least one monument fixation point 30 and the monument connection interface 22. The at least one buffered bearing 48 is configured to damp transversal movements of the monument 32 with respect to the linear orientation of the longitudinal element 14.

The term "buffered bearing" relates to a support surrounding the monument connection interface 22 that is configured to enable a floating of the monument connection interface 22 with respect to the at least two primary fixation points 24, not shown in Fig. 2.

As an advantage, parasitic loads based on transversal tolerances between the monument and the longitudinal element 14 are mitigated.

In an example not shown in Fig. 2, the longitudinal element 14 comprises fibrous material and/or dielectric material and/or insulating material.

In an example, the fibrous material and/or dielectric material and/or insulating material comprises Kevlar epoxy, carbon epoxy and glass epoxy material.

In an example, the fibrous material and/or dielectric material and/or insulating material comprises carbon fibers.

In an example, a combination of plies in the longitudinal element 14 gives the final mechanical property per direction, not shown in Fig. 2.

As an advantage, a grounding solution for the cabin modules and cabin equipment is provided.

In an example of Fig. 2, the longitudinal element 14 is provided as a rope-like structure 50 configured to transfer tensional forces.

The term "rope-like structure" relates to longitudinal element 14 that deforms upon a pressure force from one end to the other end, not shown in Fig. 2.

In an example, a fabric rope or rod is used as a tension load distribution device into the fuselage. If bushes are spread over the fuselage, i.e. the primary support structure 26, everywhere ropes can be introduced to distribute loads smoothly into the fuselage, as shown in Fig. 2.

The term "tensile forces" relates to a force that acts from the first end of the longitudinal element 14 on the second end of the longitudinal element 14 in direction of the first end. As an advantage, a "Dyneema" rope, not shown in Fig. 2, can be used as the longitudinal element 14, which has high strength fibers and reaches higher tension loads than a steel rope with a quarter of weight.

In an example of Fig. 2, the longitudinal element 14 is provided as a rod-like structure 52 configured to transfer pressure forces and/or tensile forces.

The term "rod-like structure" relates to a static, columnar structure that resists a compression force from one end to the other end, not shown in Fig. 2.

The term "pressure forces" relates to a force that acts from a first end of the longitudinal element 14 in direction towards the second end of the longitudinal element 14, not shown in Fig. 2.

In an example not shown in Fig. 2, the longitudinal element 14 is configured for a positioning with respect to the travel direction 28 and/or an orientation with respect to a plane perpendicular to the travel direction 28 of the plurality of first connection interfaces 18 and/or the at least one monument connection interface 22.

In an example, the longitudinal element 14 is designed in allowing a positioning of the first connection interface and/or monument connection interface 22 at an arbitrary point on the longitudinal element 14 and/or an orientation of the first connection interface and/or monument connection interface 22 at an arbitrary angle in a plane perpendicular to the longitudinal direction.

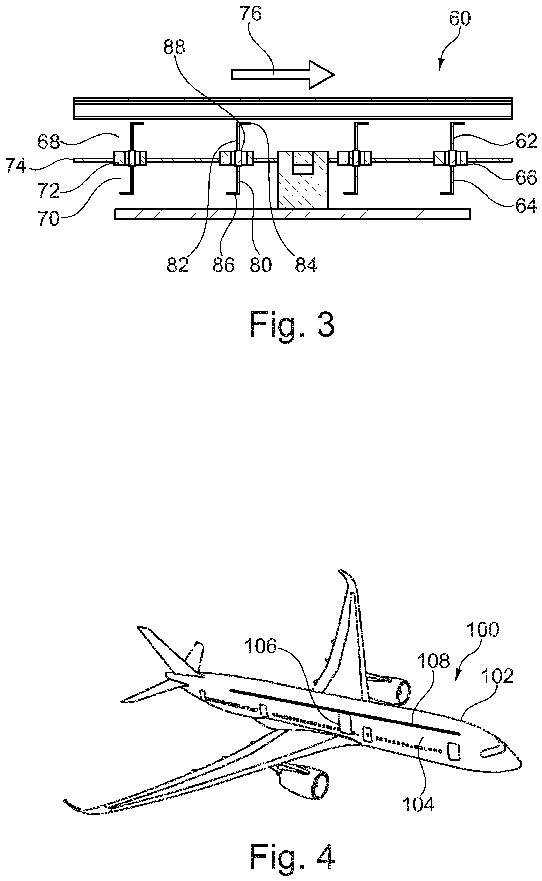

Fig. 3 schematically shows an example of a holding support 60.

In an alternative option, also claimed, the holding support 60 for monuments in an aircraft cabin is provided. The holding support 60 comprises at least two primary fixation points 62 at a primary support structure 64, and a plurality of crimping connections 66. The at least two primary fixation points 62 are distanced from each other in a travel direction of the aircraft and are positioned in an upper half 68 of the aircraft cabin 70. The plurality of crimping connections 66 is provided at the at least two primary fixation points 62 in a form-fitting manner. The plurality of crimping connections 66 is configured to provide frictionally engaged and form-fit connections 72 to a longitudinal element 74. Further, the plurality of crimping connections 66 is configured for a homogeneous and linear introduction of loads from the longitudinal element 74 in a longitudinal direction 76 of the primary support structure 64.

The term "upper half' of the aircraft cabin 70 relates to the upper space or top section of the aircraft cabin 70 that does not comprise the cabin floor but rather the cabin ceiling, as shown in Fig. 3.

In an example, the frictionally engaged and form-fit connections 72 are configured at the at least two primary fixation points 62 to manipulate a specific load path from the longitudinal element 74 to the primary support structure 64, as shown in Fig. 3.

In an example of Fig. 3, the primary support structure 64 comprises frames 80.

In an alternative option, also claimed, the primary support structure 64 comprises frames 80, each of the frames 80 having a web 82 provided between an outer skin-oriented flange 84 and an interior space-oriented flange 86. Each of the at least two primary fixation points 62 are provided at the web 82 of each of at least two subsequent frames. The at least two primary fixation points 62 guide the longitudinal element 74 in a travel direction of the aircraft and are configured for a homogeneous and linear load transfer from the frames 80 to the primary support structure 64. Preferably, each of the at least two primary fixation points 62 lies on a center 88 of a shortest distance between the outer skin-oriented flange 84 and the interior space-oriented flange 86.

In an example, the at least one monument fixation point 30, not shown in Fig. 3, is configured to receive bushings of the monument connection interface 22 for crimping connections 66 to the longitudinal element 74.

As an advantage, the flexible positioning along the axis of the longitudinal element is provided. As an advantage, a flexible attachment in a longitudinal direction of the longitudinal element results. As an advantage, a stepless tolerance compensation on a short distance is provided. As an advantage the holding system provides an adaptive layer which eliminates all tolerances between the primary structure, i.e. primary support structure and the secondary structure, i.e. the monument.

Fig. 4 schematically shows an aircraft 100 comprising a holding system 108. The aircraft 100 comprises a fuselage structure 102 enclosing a cabin space 104 equipped with at least one cabin monument 106. A holding system 108 according to one of the preceding claims is provided. The at least one cabin monument 106 is connected to the fuselage structure 102 with the holding system 108.

The term "cabin monument" relates to the monument 32.

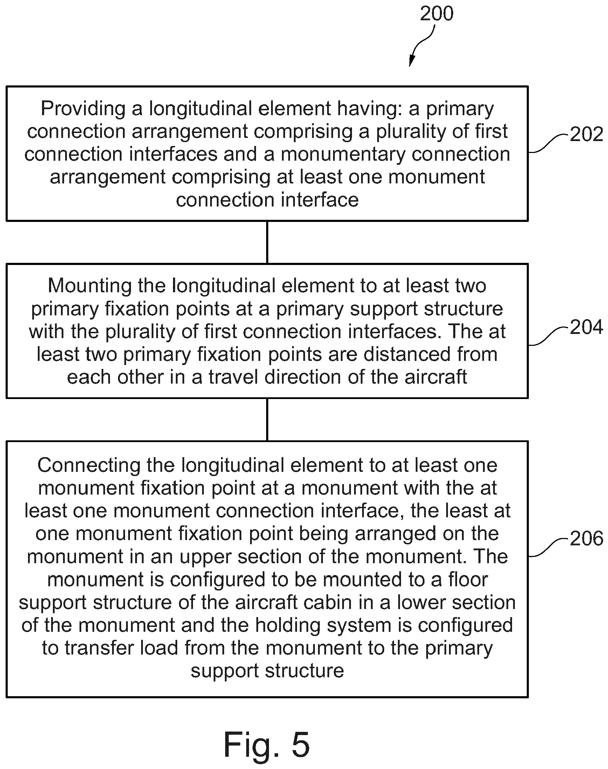

Fig. 5 shows basic steps of an example of a method 200 for providing a holding system 10 for monuments 12 in an aircraft cabin. The method 200 comprises the following steps also with reference to Fig. 1:
- In a first step 202 a longitudinal element 14 is provided having: a primary connection arrangement 16 comprising a plurality of first connection interfaces 18 and a monumentary connection arrangement 20 comprising at least one monument connection interface 22.
- In a second step 204 the longitudinal element 14 is mounted to at least two primary fixation points 24 at a primary support structure 26 with the plurality of first connection interfaces 18. The at least two primary fixation points 24 are distanced from each other in a travel direction 28 of the aircraft.
- In a third step 206 the longitudinal element 14 is connected to at least one monument fixation point 30 at a monument with the at least one monument connection interface 22, the least at one monument fixation point 30 being arranged on the monument 32 in an upper section 34 of the monument 32, wherein the monument 32 is configured to be mounted to a floor support structure 36 of the aircraft cabin in a lower section 38 of the monument 32, and wherein the holding system 10 is configured to transfer load 40 from the monument 32 to the primary support structure 26.

In an example, the method 200 further comprises the steps:
- Sticking longitudinal element 14 to the primary support structure 26 and the at least two primary connection interfaces.
- Positioning of at least one monument connection interface 22 of the longitudinal element 14
- Fixing the at least one monument connection interface 22 on the right position on the rope, matching the position of the monument 32, wherein tolerance compensation in the X- direction is achieved
- Connecting the monument interface to the monument 32.

In an example, the method 200 also comprises the steps of a disassembly of the holding system 10 in a reverse order of the steps 202, 204, 206.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A holding system (10) for monuments (12) in an aircraft cabin, the holding system comprising:
- a longitudinal element (14) having:
- a primary connection arrangement (16) comprising a plurality of first connection interfaces (18); and
- a monumentary connection arrangement (20) comprising at least one monument connection interface (22);
wherein the longitudinal element is mounted to at least two primary fixation points (24) at a primary support structure (26) with the plurality of first connection interfaces, wherein the at least two primary fixation points are distanced from each other in a travel direction (28) of the aircraft;
wherein the longitudinal element is connected to at least one monument fixation point (30) at a monument (32) with the at least one monument connection interface, the least at one monument fixation point being arranged on the monument in an upper section (34) of the monument;
wherein the monument is configured to be mounted to a floor support structure (36) of the aircraft cabin in a lower section (38) of the monument; and
wherein the holding system is configured to transfer load (40) from the monument to the primary support structure.

2. System according to claim 1, wherein the plurality of primary connection interfaces is configured to span the longitudinal element along a shortest distance (42) between the at least two primary fixation points, such that the longitudinal element obtains a linear orientation; and
wherein the longitudinal element is configured to channel forces of the load from the monument in linear directions parallel to the shortest distance.

3. System according to claim 1 or 2, wherein the plurality of primary connection interfaces is configured to hold the longitudinal element at each one of the at least two primary fixation points such that a single load acting on the longitudinal element is equally distributed among each of the at least two primary fixation points.

4. System according to claim 1, 2 or 3, wherein the at least one monument connection interface is configured to transfer load from the monument to the longitudinal element in the longitudinal direction;
wherein the longitudinal element is configured to transfer load to the plurality of first connection interfaces in the longitudinal direction; and
wherein the plurality of first connection interfaces is configured to transfer load from the longitudinal element to the primary support structure in the longitudinal direction.

5. System according to one of the preceding claims, wherein the plurality of first connection interfaces and/or the at least one monument connection interface provide a form-fit and frictionally engaged connection (44) to the longitudinal element.

6. System according to one of the preceding claims, wherein the plurality of first connection interfaces and/or the at least one monument connection interface are provided as crimping connections (46) to the longitudinal element.

7. System according to one of the preceding claims, wherein the monumentary connection arrangement provides at least one buffered bearing (48);
wherein the at least one buffered bearing is arranged between the at least one monument fixation point and the monument connection interface; and
wherein the at least one buffered bearing is configured to damp transversal movements of the monument with respect to the linear orientation of the longitudinal element.

8. System according to one of the preceding claims, wherein the longitudinal element comprises fibrous material and/or dielectric material and/or insulating material.

9. System according to one of the preceding claims, wherein the longitudinal element is provided as a rope-like structure (50) configured to transfer tensional forces.

10. System according to one of the preceding claims, wherein the longitudinal element is provided as a rod-like structure (52) configured to transfer pressure forces and/or tensile forces.

11. System according to one of the preceding claims, wherein the longitudinal element is configured for:
- a positioning with respect to the travel direction; and/or
- an orientation with respect to a plane perpendicular to the travel direction, of the plurality of first connection interfaces and/or the at least one monument connection interface.

12. An aircraft (100) comprising a fuselage structure (102) enclosing a cabin space (104) equipped with at least one cabin monument (106);
wherein a holding system (108) according to one of the preceding claims is provided; and
wherein the at least one cabin monument is connected to the fuselage structure with the holding system.

13. A method (200) for providing a holding system for monuments in an aircraft cabin, comprising the following steps:
- Providing (202) a longitudinal element having: a primary connection arrangement comprising a plurality of first connection interfaces and a monumentary connection arrangement comprising at least one monument connection interface;
- Mounting (204) the longitudinal element to at least two primary fixation points at a primary support structure with the plurality of first connection interfaces, wherein the at least two primary fixation points are distanced from each other in a travel direction of the aircraft; and
- Connecting (206) the longitudinal element to at least one monument fixation point at a monument with the at least one monument connection interface, the least at one monument fixation point being arranged on the monument in an upper section of the monument, wherein the monument is configured to be mounted to a floor support structure of the aircraft cabin in a lower section of the monument, and wherein the holding system is configured to transfer load from the monument to the primary support structure.
